# EUROPÄISCHE PATENTSCHRIFT

(11) **EP 4 099 297 B1**
(45) Veröffentlichungstag und Bekanntmachung des Hinweises auf die Patenterteilung: **21.02.2024**
(21) Anmeldenummer: 21176768.6
(22) Anmeldetag: 31.05.2021
(51) Int. Cl.: G08G 1/16, G01S 13/931, H04L 67/12, G01S 13/46

(54) **VERFAHREN ZUR GEFAHRENDETEKTION UND/ODER KOLLISIONSVERMEIDUNG EINES SICH BEWEGENDEN FAHRZEUGS, SYSTEM, COMPUTERPROGRAMM UND COMPUTERLESBARES MEDIUM**
METHOD FOR DETECTING HAZARDS AND / OR COLLISION AVOIDANCE IN A MOVING VEHICLE, SYSTEM, COMPUTER PROGRAM AND COMPUTER READABLE MEDIUM
PROCÉDÉ DE DÉTECTION DU DANGER ET/OU DE PRÉVENTION D'UNE COLLISION D'UN VÉHICULE EN DÉPLACEMENT, SYSTÈME, PROGRAMME INFORMATIQUE ET SUPPORT LISIBLE PAR ORDINATEUR

(43) Veröffentlichungstag der Anmeldung: 07.12.2022
(73) Patentinhaber: Deutsche Telekom AG, 53113 Bonn (DE)
(72) Erfinder: SCHMITT, Florian-Leon, 53227 Bonn (DE); WITYCH, Michael, Dr., 53227 Bonn (DE); SUDHOLT, Frank, 53604 Bad Honnef (DE)
(74) Vertreter: Schwöbel, Thilo K.

(56) Entgegenhaltungen:
- WO-A1-2020/070909
- DE-A1-102005 055 347
- DE-A1-102017 219 056
- DE-T2-602005 004 365
- US-A1- 2013 194 127
- US-A1- 2020 174 469
- US-A1- 2020 189 467
- US-B1- 9 483 948
- SCHULZ YANNICK ET AL: "Hearing What You Cannot See: Acoustic Vehicle Detection Around Corners", IEEE ROBOTICS AND AUTOMATION LETTERS, IEEE, Bd. 6, Nr. 2, 25. Februar 2021 (2021-02-25), Seiten 2587-2594, XP011844301, DOI: 10.1109/LRA.2021.3062254 [gefunden am 2021-03-15]

## Beschreibung

### Stand der Technik

Die Erfindung betrifft ein Verfahren zur Gefahrendetektion und/oder Kollisionsvermeidung eines sich bewegenden Fahrzeugs mit mindestens einem sich bewegenden Objekt, wobei das wenigstens eine sich bewegende Objekt in einem ersten Zeitpunkt in gerader Sichtlinie ausgehend vom Fahrzeug optisch verdeckt oder nicht sichtbar ist und in einem zweiten Zeitpunkt vom Fahrzeug aus sichtbar oder detektierbar ist.

Die Erfindung betrifft des Weiteren ein System zur Gefahrendetektion und/oder Kollisionsvermeidung eines sich bewegenden Fahrzeugs mit mindestens einem sich bewegenden Objekt, wobei das wenigstens eine sich bewegende Objekt in einem ersten Zeitpunkt in gerader Sichtlinie ausgehend vom Fahrzeug optisch verdeckt oder nicht sichtbar ist und in einem zweiten Zeitpunkt vom Fahrzeug aus sichtbar oder detektierbar ist.

Die Erfindung betrifft ferner ein Telekommunikationsnetz, umfassend wenigstens eine Edge-Cloud-Einrichtung, geeignet zur Gefahrendetektion und/oder Kollisionsvermeidung bei einem erfindungsgemäßen System bzw. mittels eines erfindungsgemäßen Verfahrens.

Des Weiteren betrifft die Erfindung ein Computerprogramm umfassend Befehle, mit deren Hilfe die Schritte eines erfindungsgemäßen Verfahrens durchführbar sind, und ein computerlesbares Medium, vorgesehen zur Speicherung eines Computerprogramms, oder ein Datenträgersignal, vorgesehen zur Übertragung eines Computerprogramms, wobei das computerlesbare Medium oder das Datenträgersignal das erfindungsgemäße Computerprogramm speichert oder überträgt.

Zur Realisierung von zukünftigen Verkehrssystemen, insbesondere umfassend autonom fahrende bzw. autonom gesteuerte Fahrzeuge, jedoch in gleicher Weise auch mit Blick auf nicht autonom oder nicht vollständig autonom gesteuerte Fahrzeuge, ist es wünschenswert, wenn möglichst viele Verkehrsteilnehmer in der Lage sind, mögliche Gefahrensituationen möglichst frühzeitig zu erkennen. Dies ist insbesondere dann zumindest schwieriger möglich, wenn sich zwei Verkehrsteilnehmer zumindest initial, d.h. zu einem ersten (früheren) Zeitpunkt, nicht entlang einer direkten Sichtlinie erkennen oder detektieren in der Lage sind.

Weitere Verfahren sind aus den Druckschriften WO 2020/070909 A1, Schulz et al., IEEE Robotics and Automation Letters, IEEE, 2021, 6, 2587-2594, DE 60 2005 004365 T2, DE 10 2005 055347 A1, US 2013/194127 A1, DE 10 2017 219056 A1, US 2020/174469 A1, US 9 483 948 B1 und US 2020/189467 A1 bekannt.

### Offenbarung der Erfindung

Der Erfindung liegt die Aufgabe zugrunde, ein Verfahren zur Gefahrendetektion und/oder Kollisionsvermeidung eines sich bewegenden Fahrzeugs mit mindestens einem sich bewegenden Objekt bereitzustellen, wobei das wenigstens eine sich bewegende Objekt in einem ersten Zeitpunkt in gerader Sichtlinie ausgehend vom Fahrzeug optisch verdeckt oder nicht sichtbar ist und in einem zweiten Zeitpunkt vom Fahrzeug aus sichtbar oder detektierbar ist.

Die Aufgabe wird erfindungsgemäß gelöst durch ein Verfahren gemäß Anspruch 1.

Es ist dadurch gemäß der vorliegenden Erfindung in vorteilhafter Weise möglich, dass in Vergleichsweise einfacher Art und Weise die Detektion einer Gefahr im Verkehr bzw. im Straßenverkehr bzw. die Vermeidung einer Kollision bewirkt werden kann.

Erfindungsgemäß ist es vorgesehen, dass ein sich bewegendes Fahrzeug ein sich bewegendes Objekt bereits zu einem ersten Zeitpunkt (in welchem das wenigstens eine sich bewegende Objekt in gerader Sichtlinie ausgehend vom Fahrzeug optisch verdeckt oder nicht sichtbar ist) zumindest teilweise erkennbar ist, so dass dann - in einem zweiten Zeitpunkt, in welchem das Objekt vom Fahrzeug aus sichtbar oder detektierbar ist - das Objekt schneller, besser und/oder sicherer erkannt werden und/oder darauf reagiert werden kann. Hierzu weist das Fahrzeug wenigstens einen LOS-Sensor, line-of-sight sensor, und wenigstens einen NLOS-Sensor, non-line-of-sight sensor, auf. Das erfindungsgemäß Verfahren weist die folgenden Verfahrensschritte auf:
-- in einem ersten Schritt werden zum ersten Zeitpunkt erste Sensorsignale mittels des wenigstens einen NLOS-Sensors generiert, wobei - nach einer Auswertung der ersten Sensorsignale - das sich bewegende Objekt detektiert wird, wobei Daten hinsichtlich der Position und/oder Bewegungsrichtung und/oder Geschwindigkeit und/oder Größe des sich bewegenden Objekts bestimmt oder berechnet werden, wobei die Daten oder zumindest ein Teil der Daten hinsichtlich der Position und/oder Bewegungsrichtung und/oder Geschwindigkeit und/oder Größe des sich bewegenden Objekts außerhalb des Fahrzeugs bestimmt oder berechnet werden,
-- in einem zweiten Schritt wird das sich bewegende Objekt mittels zweiten vom wenigstens einen LOS-Sensor generierten Sensorsignalen zum zweiten Zeitpunkt detektiert und/oder erkannt, insbesondere aufgrund der Daten hinsichtlich der Position und/oder Bewegungsrichtung und/oder Geschwindigkeit und/oder Größe des sich bewegenden Objekts.

Die Bestimmung oder Berechnung außerhalb des Fahrzeugs der Daten oder zumindest eines Teils der Daten hinsichtlich der Position und/oder Bewegungsrichtung und/oder Geschwindigkeit und/oder Größe des sich bewegenden Objekts bedeutet zum einen, dass ggf. nicht alle (berechneten) Daten hinsichtlich der Position und/oder Bewegungsrichtung und/oder Geschwindigkeit und/oder Größe des sich bewegenden Objekts außerhalb des Fahrzeugs berechnet werden müssen (sondern ein Teil davon auch im oder innerhalb des Fahrzeugs (oder durch eine Einrichtung oder eine Komponente des Fahrzeugs) berechnet werden können); zum anderen bedeutet dies, dass (auch wenn die Gesamtheit der (berechneten) Daten hinsichtlich der Position und/oder Bewegungsrichtung und/oder Geschwindigkeit und/oder Größe des sich bewegenden Objekts außerhalb des Fahrzeugs berechnet werden) nicht unbedingt sämtliche Berechnungsschritte bzw. Verarbeitung dieser Daten zwingend außerhalb des Fahrzeugs erfolgen muss.

Gemäß einer bevorzugten Ausführungsform der vorliegenden Erfindung ist es vorgesehen, dass die im ersten Schritt generierten ersten Sensorsignale mittels des wenigstens einen NLOS-Sensors aufgrund von elektromagnetischen Signalen generiert werden, die vom sich bewegenden Objekt ausgehen, sich über einen indirekten Ausbreitungspfad ausbreiten und - nach wenigstens einer Reflexion an einer Reflexionsfläche - vom wenigstens einen NLOS-Sensor detektiert oder empfangen werden.

Gemäß einer weiteren Ausführungsform der vorliegenden Erfindung ist es vorgesehen, dass das Fahrzeug elektromagnetische Primärsignale aussendet und die vom sich bewegenden Objekt ausgehenden elektromagnetischen Signale Echosignale der Primärsignale sind, die vom sich bewegenden Objekt reflektiert wurden.

Hierdurch ist es erfindungsgemäß in vorteilhafter Weise möglich, dass erfindungsgemäß eine verbesserte Detektion des Objekts möglich ist.

Gemäß der vorliegenden Erfindung ist es vorgesehen, dass zur Bestimmung oder Berechnung außerhalb des Fahrzeugs der Daten (bzw. zumindest eines Teils der Daten) hinsichtlich der Position und/oder Bewegungsrichtung und/oder Geschwindigkeit und/oder Größe des sich bewegenden Objekts zumindest ein Teil der zum ersten Zeitpunkt generierten ersten Sensorsignale mittels einer Kommunikationsschnittstelle des Fahrzeugs an eine Edge-Cloud-Einrichtung eines Telekommunikationsnetzes übertragen wird und die berechneten Daten hinsichtlich der Position und/oder Bewegungsrichtung und/oder Geschwindigkeit und/oder Größe des sich bewegenden Objekts mittels der Kommunikationsschnittstelle zum Fahrzeug übertragen werden.

Dadurch ist es erfindungsgemäß vorteilhaft möglich, dass solche Berechnungen nicht nur genauer und schneller durchführbar sind (gegenüber einer Berechnung im Fahrzeug), sondern auch Informationen über besondere Gefahrenhäufungspunkte detektiert bzw. gesammelt werden können.

Gemäß einer weiteren Ausführungsform der vorliegenden Erfindung ist es vorgesehen, dass die Detektion oder Erkennung eines beliebigen Objekts mittels des wenigstens einen LOS-Sensors periodisch mit wenigstens einer vorgegebenen Periodendauer erfolgt, wobei die über die Kommunikationsschnittstelle des Fahrzeugs empfangenen berechneten Daten hinsichtlich der Position und/oder Bewegungsrichtung und/oder Geschwindigkeit und/oder Größe des sich bewegenden Objekts wenigstens eine ganze Periodendauer vor dem zweiten Zeitpunkt erfolgt, um insbesondere die Detektion des sich bewegenden Objekts mittels des wenigstens einen LOS-Sensors schneller und/oder präziser durchführen zu können.

Gemäß der vorliegenden Erfindung ist es vorgesehen, dass die über die Kommunikationsschnittstelle des Fahrzeugs empfangenen berechneten Daten hinsichtlich der Position und/oder Bewegungsrichtung und/oder Geschwindigkeit und/oder Größe des sich bewegenden Objekts im Fahrzeug genutzt werden, um den wenigstens einen LOS-Sensor oder dessen Auswertungslogik auf die Detektion und/oder Erkennung des sich bewegenden Objekts vorbereitet wird.

Gemäß einer weiteren Ausführungsform der vorliegenden Erfindung ist es vorgesehen, dass
-- die elektromagnetischen Signale oder
-- die elektromagnetischen Primärsignale und die elektromagnetischen Signale Funkwellensignale oder Lichtsignale im sichtbaren Spektralbereich oder Infrarotsignale sind.

Des Weiteren wird die Aufgabe gelöst durch ein System gemäß Anspruch 6.

Es ist dadurch gemäß der vorliegenden Erfindung in vorteilhafter Weise möglich, ein zum erfindungsgemäßen Verfahren korrespondierendes erfindungsgemäßes System bereitzustellen und somit zu einer verbesserten Gefahrendetektion bzw. Kollisionsvermeidung zu gelangen.

Des Weiteren wird die Ausgabe gelöst durch ein Computerprogramm umfassend Befehle, mit deren Hilfe die Schritte eines erfindungsgemäßen Verfahrens durchführbar sind, wenn das Computerprogramm auf einer programmierbaren Einrichtung des Fahrzeugs und einer Edge-Cloud-Einrichtung, ausgeführt wird.

Des Weiteren wird die Aufgabe gelöst durch ein computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das erfindungsgemäße Computerprogramm speichert oder überträgt oder wobei das computerlesbare Medium oder das Datenträgersignal den auf einer programmierbaren Einrichtung des Fahrzeugs und einer Edge-Cloud-Einrichtung, auszuführenden Teil des erfindungsgemäßen Computerprogramms speichert oder überträgt.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

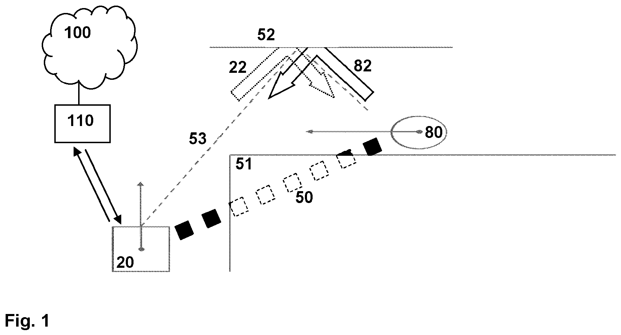

- **Figur** 1: zeigt eine schematische Situation zur Veranschaulichung des erfindungsgemäßen Verfahrens zur Gefahrendetektion und/oder Kollisionsvermeidung eines sich bewegenden Fahrzeugs mit mindestens einem sich bewegenden Objekt.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

Die vorliegende Erfindung wird in Bezug auf bestimmte Ausführungsformen und mit Bezug auf bestimmte Zeichnungen beschrieben, aber die Erfindung ist nicht darauf beschränkt, sondern nur durch die Ansprüche. Die beschriebenen Zeichnungen sind nur schematisch und nicht einschränkend. In den Zeichnungen kann die Größe einiger Elemente übertrieben sein und nicht im Maßstab zur Veranschaulichung gezeichnet werden.

Wenn ein unbestimmter oder ein bestimmter Artikel verwendet wird, wenn auf ein einzelnes Substantiv Bezug genommen wird, z.B. "ein", "eine", "der", "die", "das", schließt dies einen Plural dieses Substantivs ein, sofern nicht ausdrücklich etwas anderes angegeben ist.

Darüber hinaus werden die Begriffe erste, zweite, dritte und dergleichen in der Beschreibung und in den Ansprüchen zur Unterscheidung zwischen ähnlichen Elementen und nicht unbedingt zur Beschreibung einer sequenziellen oder chronologischen Reihenfolge verwendet. Es ist zu verstehen, dass die so verwendeten Begriffe unter geeigneten Umständen austauschbar sind und dass die Ausführungsformen der hierin beschriebenen Erfindung in anderer Abfolge als den hierin beschriebenen oder veranschaulichten funktionieren können.

In Figur 1 ist schematisch eine Situation zur Veranschaulichung des erfindungsgemäßen Verfahrens zur Gefahrendetektion und/oder Kollisionsvermeidung eines sich bewegenden Fahrzeugs 20 mit mindestens einem sich bewegenden Objekt 80 dargestellt. Nachfolgend wird das Fahrzeug 20 (bzw. ein anderer Verkehrsteilnehmer) auch mit der Bezeichnung FZG1 bezeichnet und das sich bewegende Objekt 80 auch mit der Bezeichnung OBJ1. Dargestellt ist etwa die Situation, in der ein FZG1 auf eine schlecht einsehbare Kreuzung zu fährt. Das Objekt OBJ1 (bzw. das sich bewegende Objekt 80 - insbesondere ebenfalls ein Fahrzeug oder aber auch ein anderer Verkehrsteilnehmer) fährt ebenfalls auf diese Kreuzung zu.

Da sich die Richtungen (bzw. Bewegungsrichtungen; in Figur 1 markiert mittels eines Pfeils ausgehend vom Zentrum jeweils des Fahrzeugs 20/FZG1 bzw. des Objekts 80/OBJ1) von FZG1 und OBJ1 kreuzen, besteht Kollisionsgefahr. OBJ1 kann z.B. ein Fahrradfahrer, ein Tier, eine Plastiktüte oder ein weiteres Fahrzeug sein.

Es besteht (zunächst, d.h. in einem ersten Zeitpunkt, welcher in Figur 1 dargestellt ist) kein Sichtkontakt zwischen FZG1 und OBJ1, d.h. das wenigstens eine sich bewegende Objekt 80 ist im ersten Zeitpunkt in gerader Sichtlinie 50 ausgehend vom Fahrzeug 20 optisch verdeckt oder nicht sichtbar, weil ein Gegenstand 51 (etwa ein Haus, ein sonstiges Gebäude, ein (insbesondere stehendes oder sich lediglich vergleichsweise langsam bewegendes) Fahrzeug oder dergleichen) das Objekt 80 aus der Perspektive des Fahrzeugs 20 verdeckt. Erst in einem zweiten Zeitpunkt ist das Objekt 80 vom Fahrzeug 20 aus sichtbar oder detektierbar (dieser zweite Zeitpunkt ist jedoch in Figur 1 nicht dargestellt bzw. die Positionen des Fahrzeugs 20 bzw. des Objekts 80 sind für diesen zweiten Zeitpunkt nicht eingezeichnet).

Sofern das Fahrzeug 20 lediglich über einen bzw. wenigstens einen LOS-Sensor, d.h. einen sog. line-of-sight sensor, verfügt, ist das Objekt 80 lediglich im zweiten Zeitpunkt durch das Fahrzeug 20 bzw. durch einen LOS-Sensor detektierbar, d.h. insbesondere im ersten Zeitpunkt noch nicht detektierbar.

Erfindungsgemäß sieht das Verfahren zur Gefahrendetektion und/oder Kollisionsvermeidung nun vor, dass das sich bewegende Fahrzeugs 20 - neben dem wenigstens einen LOS-Sensor, line-of-sight sensor - auch wenigstens einen NLOS-Sensor, non-line-of-sight sensor, aufweist. Mittels des NLOS-Sensors ist das Fahrzeug 20 in der Lage, das Objekt 80 bereits zeitlich vor dem zweiten Zeitpunkt (d.h. insbesondere zum ersten Zeitpunkt) zu detektieren.

Das erfindungsgemäße Verfahren weist nun die folgenden Schritte auf:
-- in einem ersten Schritt werden zum ersten Zeitpunkt erste Sensorsignale mittels des wenigstens einen NLOS-Sensors generiert, wobei - nach einer Auswertung der ersten Sensorsignale - das sich bewegende Objekt 80 detektiert wird, wobei Daten hinsichtlich der Position und/oder Bewegungsrichtung und/oder Geschwindigkeit und/oder Größe des sich bewegenden Objekts 80 bestimmt oder berechnet werden, wobei die Daten oder zumindest ein Teil der Daten hinsichtlich der Position und/oder Bewegungsrichtung und/oder Geschwindigkeit und/oder Größe des sich bewegenden Objekts 80 außerhalb des Fahrzeugs 20 bestimmt oder berechnet werden,
-- in einem zweiten Schritt wird das sich bewegende Objekt 80 mittels zweiten vom wenigstens einen LOS-Sensor generierten Sensorsignalen zum zweiten Zeitpunkt detektiert und/oder erkannt, insbesondere aufgrund der Daten hinsichtlich der Position und/oder Bewegungsrichtung und/oder Geschwindigkeit und/oder Größe des sich bewegenden Objekts 80.

Die LOS-Sensoren von FZG1 entsprechen insbesondere gängige nur LOSgeeigneten (line-of-sight) elektrooptische Sensoren von modernen, insbesondere autonom fahrenden, Fahrzeugen wie Lidar und digitale Kameras. Ferner entsprechen die NLOS-geeigneten Sensoren insbesondere einer Radartechnologie oder mehrerer Radartechnologien, die es ermöglicht oder ermöglichen über Reflexionsflächen Gegenstände außerhalb des direkten Blickfeldes zu erkennen.

Erfindungsgemäß ist somit insbesondere vorgesehen, dass der NLOS-Sensor bzw. die NLOS-Sensoren (insbesondere die Radartechnologie) des Fahrzeugs FZG1 das Objekt OBJ1 mittels non-line-of-sight detection (NLOS) erkennt bzw. erkennen, so kann das Fahrzeug 20 bzw. eine Auswerteeinrichtung des Fahrzeugs 20 die Position und/oder die Ausdehnung, und im besten Fall auch Richtung und Geschwindigkeit des Objekts 80 messen. Die Messmethodik ist jedoch oftmals in realen Bedingungen nicht ausreichend genau, da je nach Beschaffenheit der Reflexionsfläche ein größerer Informationsgehalt verloren gehen kann und die Berechnungsdauern für das Ergebnis durchaus auch zu lang für die im Fahrzeug 20 befindliche Auswerteeinrichtung (bzw. ein FZG-Board-Computer) sind. Jedoch ist es - auch aufgrund einer lediglich vergleichsweise ungenauen Information über die Position und/oder die Größe und/oder die Richtung und/oder die Geschwindigkeit des Objekts 80 - dem Fahrzeug 20 möglich, sich auf eine potenzielle Gefahr einzustellen, und die anderen elektrooptischen LOS-Sensoren mit hochfrequenten Messungen in die erwartete Gefahren-Richtung von des Objekts OBJ1 richten.

Erfindungsgemäß ist es somit insbesondere vorgesehen, dass die im ersten Schritt generierten ersten Sensorsignale mittels des wenigstens einen NLOS-Sensors aufgrund von (in Figur 1 in Form eines vom Objekt 80 ausgehenden und zum Fahrzeug 20 hin weisenden reflektierten Pfeils dargestellten) elektromagnetischen Signalen 82 generiert werden, die vom sich bewegenden Objekt 80 ausgehen, sich über einen indirekten Ausbreitungspfad 53 ausbreiten und - nach wenigstens einer Reflexion an einer Reflexionsfläche 52 - vom wenigstens einen NLOS-Sensor des Fahrzeugs 20 detektiert oder empfangen werden. Hierzu ist es erfindungsgemäß insbesondere vorgesehen, dass das Fahrzeug 20 (in Figur 1 in Form eines vom Fahrzeug 20 ausgehenden und zum Objekt 80 hin weisenden reflektierten Pfeils dargestellten) elektromagnetische Primärsignale 22 aussendet und die vom sich bewegenden Objekt 80 ausgehenden elektromagnetischen Signale 82 Echosignale der Primärsignale 22 sind, die vom sich bewegenden Objekt 80 reflektiert wurden. Somit ist es erfindungsgemäß vorteilhaft möglich, dass sobald das Objekt 80/OBJ1 dann später (d.h. zum zweiten Zeitpunkt) für die Standard Sensorik mit line-of sight (LOS) Techniken sichtbar wird, das Fahrzeug 20/FZG1 bereits mittels der Zeit- und Wegdifferenz zwischen der initialen NLOS-Messung und der ersten sichtbaren Messung die Geschwindigkeit des Objekts OBJ1 errechnen kann. Eine potenzielle Gefahr kann somit in vorteilhafter Weise schon früh erkannt werden.

Erfindungsgemäß ist nun insbesondere vorgesehen, dass zur Bestimmung oder Berechnung außerhalb des Fahrzeugs 20 der Daten hinsichtlich der Position und/oder Bewegungsrichtung und/oder Geschwindigkeit und/oder Größe des sich bewegenden Objekts 80 zumindest ein Teil der zum ersten Zeitpunkt generierten ersten Sensorsignale mittels einer Kommunikationsschnittstelle des Fahrzeugs 20 an eine Edge-Cloud-Einrichtung 110 eines Telekommunikationsnetzes 100 übertragen wird und die berechneten Daten hinsichtlich der Position und/oder Bewegungsrichtung und/oder Geschwindigkeit und/oder Größe des sich bewegenden Objekts 80 mittels der Kommunikationsschnittstelle zum Fahrzeug 20 übertragen werden. Typischerweise ist die Berechnung von NLOS-Objekten sehr rechenaufwendig. Das Fahrzeug 20/FZG1 kann nach dem Erkennen des Objekts 80/OBJ1 mittels NLOS-Techniken die erhobenen Daten in die 5G Edge Cloud (d.h. die Edge-Cloud-Einrichtung 110) senden und die Berechnung der Informationen in die 5G Edge Cloud auslagern. Die 5G Edge Cloud liefert das entsprechende Ergebnis (Position, Geschwindigkeitsvektor und Objektgröße zum Zeitpunkt t, d.h. zum zweiten Zeitpunkt bzw. zeitlich nach dem zweiten Zeitpunkt, jedoch jedenfalls zeitlich vor dem ersten Zeitpunkt) an das Fahrzeug 20/FZG 1.
Erfindungsgemäß können die bisherigen Schritte mehrmals nacheinander erfolgen. Wenn dann das Objekt 80/OBJ1 im Sichtfeld (des Fahrzeugs 20) ist, fragt das Fahrzeug 20/FZG1 über niedrig-Latenz 5G das Rechenergebnis ggfs. nochmals an, um die Daten mit den neuen optischen Daten zusammenzufügen.
Die Edge-Cloud hat insbesondere sogar so lange Zeit, das Objekt 80/OBJ1 und seine Merkmale beim ersten und einzigen Mal zu berechnen, bis das Objekt 80/OBJ1 in das Blickfeld des Fahrzeugs 20/FZG1 tritt. Je länger (und somit in der Regel auch je besser) gerechnet wird, umso genauer ist die Information (bzw. kann die Information sein), die das Fahrzeug 20/FZG1 dann verarbeiten kann. Erfindungsgemäß ist jedoch insbesondere bevorzugt, wenn das Fahrzeug 20/FZG1 die Information bezüglich des Objekts 80/OBJ1 mindestens einen FZG-Computer-Berechnungs-Zyklus (von beispielsweise 50ms) vor dem zweiten Zeitpunkt (d.h. vor der LOS-Sichtbarkeit des Objektes 80) erhält, um seine LOS-Sensoren rechtzeitig darauf einrichten zu können.

Erfindungsgemäß ist es somit insbesondere möglich, in vorteilhafter Weise eine Reaktionszeit-Verkürzung im Vergleich zu üblichen Verfahren, die lediglich auf der Nutzung von LOS-Sensoren beruhen, zu erreichen: Sobald das Fahrzeug 20/FZG1 zum Zeitpunkt t (d.h. zeitlich vor dem zweiten Zeitpunkt) eine ausreichend gute Vorinformation über eine potenzielle Gefahr des "den LOS-Sensoren noch unsichtbaren" Objekts 80/OBJ1 erhält, kann das Fahrzeug 20/FZG1 kurz vor dem zweiten Zeitpunkt (auch bezeichnet mit: t+dt) einen Teil seiner Sensorik oder Ausschnitte eines Sensors bereits auf die potentielle Gefahrenstelle des ihm mitgeteilten prognostizierten Sichtbarkeits-Zeitpunkts t+dt des Objekts 80/OBJ1 ausrichten. Das Fahrzeug 20/FZG1 ist dann bei der LOS-Erkennung wesentlich schneller, wenn das Objekt 80/OBJ1 auftaucht, als wenn seine Sensorik die üblichen z.B. Rotationszyklen z.B. eines Lidars oder der Ausrichtung/Auslesung einer Kamera einhält. Wenn ein Fahrzeug 20/FZG1 z.B. einen Lidar Rotationszyklus bzw. einen Verschwenkzyklus der Sensoreinheit von 50 ms hätte, dann müsste das Fahrzeug 20/FZG1 im Mittel 25 ms (d.h. die halbe Zykluszeit von 50 ms) warten, bis es das Objekt ohne Vorwarnung einfängt. Diese 25 ms ist ein erfindungsgemäßes System wegen der Vorprozessierung jedoch schneller, wodurch das Fahrzeug 20/FZG1 im betrachteten Beispiel somit 25 ms schneller auf die Situation reagieren kann.

Somit ist es erfindungsgemäß insbesondere vorgesehen, dass die über die Kommunikationsschnittstelle des Fahrzeugs 20 empfangenen berechneten Daten hinsichtlich der Position und/oder Bewegungsrichtung und/oder Geschwindigkeit und/oder Größe des sich bewegenden Objekts 80 im Fahrzeug 20 genutzt werden, um den wenigstens einen LOS-Sensor oder dessen Auswertungslogik auf die Detektion und/oder Erkennung des sich bewegenden Objekts 80 vorbereitet wird.

Insbesondere ist erfindungsgemäß vorgesehen, dass die elektromagnetischen Signale 82 oder aber die elektromagnetischen Primärsignale 22 und die elektromagnetischen Signale 82 Funkwellensignale oder Lichtsignale im sichtbaren Spektralbereich oder Infrarotsignale sind.

Das beschriebene Verfahren und die initialen Datenerhebung mit dem Radarscanner kann selektiv (etwa über Trigger) auch lediglich dann angewendet werden, wenn eine potentielle Gefahr durch NLOS Objekte eher wahrscheinlich ist, so beispielsweise wenn sich das Fahrzeug 20/FZG1 auf einer Vorfahrtstraße befindet oder grünes Ampellicht hat und eine kreuzende Straßeneinfahrt für die anderen LOS Sensoren nicht einsichtig ist. Andererseits wird beispielsweise das Verfahren nicht initiiert, wenn das Fahrzeug 20/FZG1 steht oder so langsam fährt, dass es bei einer Gefahr durch ein NLOS Objekt noch so frühzeitig reagieren könnte, dass es selber oder das Objekt 80 keinen Schaden erleiden würde. Da ein autonom fahrendes Fahrzeug 20/FZG1 in der Regel schneller als ein humaner Benutzer des Fahrzeugs 20 zu reagieren in der Lage ist, wird der Bordcomputer des Fahrzeugs 20/FZG1 auch prüfen, ob das Fahrzeug 20/ FZG1 autonom fährt bzw. agiert oder aber menschengesteuert ist. Im letzteren Fall ist es erfindungsgemäß insbesondere vorgesehen, dass der Einsatz des Verfahrens (d.h. unter Heranziehung der NLOS-Sensorik) gemäß der vorliegenden Erfindung früher (d.h. bereits bei einer geringeren Geschwindigkeit) erfolgen muss, da ein Mensch eine längere Reaktionszeit hat und nicht immer 100% ideal auf die von der Cloud ausgewertete NLOS Information reagieren wird. Alternativ könnte der Computer des Fahrzeugs 20/FZG1 aber bei erkannter Gefahr durch das mittels NLOS-Sensorik erkannten Objekts 80 die Steuerung vom Menschen automatisch übernehmen. Erfindungsgemäß sind darüber hinaus auch andere NLOS Verfahren als das genannte Radar Verfahren zur Verwendung möglich, so z.B. ein Verfahren, das mit einer CMOS Kamera eine Szene aufnimmt und anhand der Reflektionen und/oder Schatten (an sichtbaren und unsichtbaren Objekten ausgelöst) durch bekannte Beleuchtungsquellen (z.B. die Sonne oder Straßenlaternen) oder verdeckte Beleuchtungsquellen (z.B. Straßenlaternen oder Scheinwerfer des Gefahren-Objektes 80 oder anderer Objekte), mit dem Position und Ausdehnung von NLOS Objekten 80 möglich ist. Da der hierfür erforderliche Rechenaufwand jedoch bedeutend ist, bietet die Auswertung bzw. Berechnung in der Edge-Cloud-Einrichtung 110 einen besonders großen Vorteil.

Ein weiteres Beispiel eines NLOS Sensors ist eine Infrarot-Kamera im Fahrzeug 20/FZG1, die die Wärmeausstrahlung und Veränderung eines bewegten NLOS Objektes 80 auf die Umgebung zu detektieren in der Lage ist.

Somit ist es erfindungsgemäß möglich, Zusatzinformationen, welche durch die Bewegung des Fahrzeugs 20/FZG1 und/oder durch die Bewegung des NLOS-Objektes 80 (bzw. des NLOS-detektierbaren Objekts 80) entstehen, für die Bestimmung der Position und Ausdehnung von Objekten 80 heranzuziehen. Je mehr Bewegung somit beim Fahrzeug 20/FZG1 und/oder beim NLOS-detektierten Objekt 80 vorliegen, umso besser ist es erfindungsgemäß möglich, mittels des Verfahrens bzw. des Systems eine Gefahrenreduktion bzw. eine Kollisionsvermeidung herbeizuführen.

## Patentansprüche

1. Verfahren zur Gefahrendetektion und/oder Kollisionsvermeidung eines sich bewegenden Fahrzeugs (20) mit mindestens einem sich bewegenden Objekt (80), wobei das wenigstens eine sich bewegende Objekt (80) in einem ersten Zeitpunkt in gerader Sichtlinie (50) ausgehend vom Fahrzeug (20) optisch verdeckt oder nicht sichtbar ist und in einem zweiten Zeitpunkt vom Fahrzeug (20) aus sichtbar oder detektierbar ist, wobei das Fahrzeug (20) wenigstens einen LOS-Sensor, line-of-sight sensor, und wenigstens einen NLOS-Sensor, non-line-of-sight sensor, aufweist, wobei das Verfahren die folgenden Verfahrensschritte aufweist:
-- in einem ersten Schritt werden zum ersten Zeitpunkt erste Sensorsignale mittels des wenigstens einen NLOS-Sensors generiert, wobei - nach einer Auswertung der ersten Sensorsignale - das sich bewegende Objekt (80) detektiert wird, wobei Daten hinsichtlich der Position und/oder Bewegungsrichtung und/oder Geschwindigkeit und/oder Größe des sich bewegenden Objekts (80) bestimmt oder berechnet werden, wobei die Daten oder zumindest ein Teil der Daten hinsichtlich der Position und/oder Bewegungsrichtung und/oder Geschwindigkeit und/oder Größe des sich bewegenden Objekts (80) außerhalb des Fahrzeugs (20) bestimmt oder berechnet werden,
-- in einem zweiten Schritt wird das sich bewegende Objekt (80) mittels zweiten vom wenigstens einen LOS-Sensor generierten Sensorsignalen zum zweiten Zeitpunkt detektiert und/oder erkannt aufgrund der Daten hinsichtlich der Position und/oder Bewegungsrichtung und/oder Geschwindigkeit und/oder Größe des sich bewegenden Objekts (80),
wobei zur Bestimmung oder Berechnung außerhalb des Fahrzeugs (20) der Daten hinsichtlich der Position und/oder Bewegungsrichtung und/oder Geschwindigkeit und/oder Größe des sich bewegenden Objekts (80) zumindest ein Teil der zum ersten Zeitpunkt generierten ersten Sensorsignale mittels einer Kommunikationsschnittstelle des Fahrzeugs (20) an eine Edge-Cloud-Einrichtung (110) eines Telekommunikationsnetzes (100) übertragen wird und die berechneten Daten hinsichtlich der Position und/oder Bewegungsrichtung und/oder Geschwindigkeit und/oder Größe des sich bewegenden Objekts (80) mittels der Kommunikationsschnittstelle zum Fahrzeug (20) übertragen werden, wobei die über die Kommunikationsschnittstelle des Fahrzeugs (20) empfangenen berechneten Daten hinsichtlich der Position und/oder Bewegungsrichtung und/oder Geschwindigkeit und/oder Größe des sich bewegenden Objekts (80) im Fahrzeug (20) genutzt werden, um den wenigstens einen LOS-Sensor oder dessen Auswertungslogik auf die Detektion und/oder Erkennung des sich bewegenden Objekts (80) vorzubereiten.

2. Verfahren nach Anspruch 1, **dadurch gekennzeichnet, dass** die im ersten Schritt generierten ersten Sensorsignale mittels des wenigstens einen NLOS-Sensors aufgrund von elektromagnetischen Signalen (82) generiert werden, die vom sich bewegenden Objekt (80) ausgehen, sich über einen indirekten Ausbreitungspfad (53) ausbreiten und - nach wenigstens einer Reflexion an einer Reflexionsfläche (52) - vom wenigstens einen NLOS-Sensor detektiert oder empfangen werden.

3. Verfahren nach Anspruch 2, **dadurch gekennzeichnet, dass** das Fahrzeug (20) elektromagnetische Primärsignale (22) aussendet und die vom sich bewegenden Objekt (80) ausgehenden elektromagnetischen Signale (82) Echosignale der Primärsignale (22) sind, die vom sich bewegenden Objekt (80) reflektiert wurden.

4. Verfahren nach einem der vorhergehenden Ansprüche, **dadurch gekennzeichnet, dass** die Detektion oder Erkennung eines beliebigen Objekts mittels des wenigstens einen LOS-Sensors periodisch mit wenigstens einer vorgegebenen Periodendauer erfolgt, wobei die über die Kommunikationsschnittstelle des Fahrzeugs (20) empfangenen berechneten Daten hinsichtlich der Position und/oder Bewegungsrichtung und/oder Geschwindigkeit und/oder Größe des sich bewegenden Objekts (80) wenigstens eine ganze Periodendauer vor dem zweiten Zeitpunkt erfolgt, um insbesondere die Detektion des sich bewegenden Objekts (80) mittels des wenigstens einen LOS-Sensors schneller und/oder präziser durchführen zu können.

5. Verfahren nach einem der Ansprüche 2 bis 4, **dadurch gekennzeichnet, dass**
-- die elektromagnetischen Signale (82) oder
-- die elektromagnetischen Primärsignale (22) und die elektromagnetischen Signale (82)
Funkwellensignale oder Lichtsignale im sichtbaren Spektralbereich oder Infrarotsignale sind.

6. System zur Gefahrendetektion und/oder Kollisionsvermeidung eines sich bewegenden Fahrzeugs (20) mit mindestens einem sich bewegenden Objekt (80), wobei das System eine Kommunikationsschnittstelle des sich bewegenden Fahrzeugs (20) und eine Edge-Cloud-Einrichtung (110) eines Telekommunikationsnetzes (100) umfasst,
wobei das wenigstens eine sich bewegende Objekt (80) in einem ersten Zeitpunkt in gerader Sichtlinie (50) ausgehend vom Fahrzeug (20) optisch verdeckt oder nicht sichtbar ist und in einem zweiten Zeitpunkt vom Fahrzeug (20) aus sichtbar oder detektierbar ist, wobei das Fahrzeug (20) wenigstens einen LOS-Sensor, line-of-sight sensor, und wenigstens einen NLOS-Sensor, non-line-of-sight sensor, aufweist, wobei das System derart konfiguriert ist,
-- erste Sensorsignale mittels des wenigstens einen NLOS-Sensors zu generieren, wobei das System derart konfiguriert ist, - nach einer Auswertung der ersten Sensorsignale- das sich bewegende Objekt (80)zu detektieren, wobei das System derart konfiguriert ist, Daten hinsichtlich der Position und/oder Bewegungsrichtung und/oder Geschwindigkeit und/oder Größe des sich bewegenden Objekts (80) zu bestimmen oder berechnen , wobei das System derart konfiguriert ist, die Daten oder zumindest ein Teil der Daten hinsichtlich der Position und/oder Bewegungsrichtung und/oder Geschwindigkeit und/oder Größe des sich bewegenden Objekts (80) außerhalb des Fahrzeugs (20) zu bestimmen oder berechnen,
-- das sich bewegende Objekt (80) mittels zweiten vom wenigstens einen LOS-Sensor generierten Sensorsignalen zum zweiten Zeitpunkt zu detektieren und/oder zu erkennen aufgrund der Daten hinsichtlich der Position und/oder Bewegungsrichtung und/oder Geschwindigkeit und/oder Größe des sich bewegenden Objekts (80),
wobei das System derart konfiguriert ist, zur Bestimmung oder Berechnung außerhalb des Fahrzeugs (20) der Daten hinsichtlich der Position und/oder Bewegungsrichtung und/oder Geschwindigkeit und/oder Größe des sich bewegenden Objekts (80) zumindest ein Teil der zum ersten Zeitpunkt generierten ersten Sensorsignale mittels der Kommunikationsschnittstelle des Fahrzeugs (20) an die Edge-Cloud-Einrichtung (110) des Telekommunikationsnetzes (100) zu übertragen und die berechneten Daten hinsichtlich der Position und/oder Bewegungsrichtung und/oder Geschwindigkeit und/oder Größe des sich bewegenden Objekts (80) mittels der Kommunikationsschnittstelle zum Fahrzeug (20) zu übertragen,
wobei das System derart konfiguriert ist, die über die Kommunikationsschnittstelle des Fahrzeugs (20) empfangenen berechneten Daten hinsichtlich der Position und/oder Bewegungsrichtung und/oder Geschwindigkeit und/oder Größe des sich bewegenden Objekts (80) im Fahrzeug (20) zu nutzen, um den wenigstens einen LOS-Sensor oder dessen Auswertungslogik auf die Detektion und/oder Erkennung des sich bewegenden Objekts (80) vorzubereiten.

7. Computerprogramm umfassend Befehle, mit deren Hilfe die Schritte eines Verfahrens nach einem der Ansprüche 1 bis 5 durchführbar sind, wenn das Computerprogramm auf einer programmierbaren Einrichtung des Fahrzeugs und einer Edge-Cloud-Einrichtung, ausgeführt wird.

8. Computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das Computerprogramm nach Anspruch 7 speichert oder überträgt oder wobei das computerlesbare Medium oder das Datenträgersignal den auf einer programmierbaren Einrichtung des Fahrzeugs und einer Edge-Cloud-Einrichtung, auszuführenden Teil des Computerprogramms nach Anspruch 7 speichert oder überträgt.

## Claims

1. Method for hazard detection and/or collision avoidance of a moving vehicle (20) with at least one moving object (80), wherein the at least one moving object (80) is visually obscured or not visible in a straight line of sight (50) from the vehicle (20) at a first point in time and is visible or detectable from the vehicle (20) at a second point in time, wherein the vehicle (20) comprises at least one LOS sensor, line-of-sight sensor, and at least one NLOS sensor, non-line-of-sight sensor, wherein the method comprises the following method steps:
- in a first step, first sensor signals are generated at the first point in time by means of the at least one NLOS sensor, wherein - after evaluation of the first sensor signals - the moving object (80) is detected, wherein data relating to the position and/or movement direction and/or speed and/or size of the moving object (80) are determined or calculated, wherein the data or at least a portion of the data relating to the position and/or movement direction and/or speed and/or size of the moving object (80) are determined or calculated outside the vehicle (20),
- in a second step, the moving object (80) is detected and/or recognised at the second point in time by means of second sensor signals generated by the at least one LOS sensor, on the basis of the data relating to the position and/or movement direction and/or speed and/or size of the moving object (80),
wherein, in order to determine or calculate outside the vehicle (20) the data relating to the position and/or movement direction and/or speed and/or size of the moving object (80), at least a portion of the first sensor signals generated at the first point in time is transmitted to an edge cloud device (110) of a telecommunications network (100) by means of a communications interface of the vehicle (20) and the calculated data relating to the position and/or movement direction and/or speed and/or size of the moving object (80) are transmitted to the vehicle (20) by means of the communications interface,
wherein the calculated data received via the communications interface of the vehicle (20) and relating to the position and/or movement direction and/or speed and/or size of the moving object (80) in the vehicle (20) are used in order to prepare the at least one LOS sensor or the evaluation logic thereof for the detection and/or recognition of the moving object (80).

2. Method as claimed in claim 1, **characterised in that** the first sensor signals generated in the first step are generated by means of the at least one NLOS sensor on the basis of electromagnetic signals (82) which emanate from the moving object (80), are propagated via an indirect propagation path (53) and - after at least one reflection at a reflection surface (52) - are detected or received by the at least one NLOS sensor.

3. Method as claimed in claim 2, **characterised in that** the vehicle (20) emits electromagnetic primary signals (22) and the electromagnetic signals (82) emanating from the moving object (80) are echo signals of the primary signals (22) which have been reflected by the moving object (80).

4. Method as claimed in any one of the preceding claims, **characterised in that** the detection or recognition of any object by means of the at least one LOS sensor is effected periodically with at least one predetermined period duration, wherein the calculated data received via the communications interface of the vehicle (20) and relating to the position and/or movement direction and/or speed and/or size of the moving object (80) is effected for at least one whole period duration before the second point in time in order to be able to perform, in particular, the detection of the moving object (80) more rapidly and/or more precisely by means of the at least one LOS sensor.

5. Method as claimed in any one of claims 2 to 4, **characterised in that**
- the electromagnetic signals (82) or
- the electromagnetic primary signals (22) and the electromagnetic signals (82)
are radio wave signals or light signals in the visible spectral range or infrared signals.

6. System for hazard detection and/or collision avoidance of a moving vehicle (20) with at least one moving object (80), wherein the system comprises a communications interface of the moving vehicle (20) and an edge cloud device (110) of a telecommunications network (100),
wherein the at least one moving object (80) is visually obscured or not visible in a straight line of sight (50) from the vehicle (20) at a first point in time and is visible or detectable from the vehicle (20) at a second point in time, wherein the vehicle (20) comprises at least one LOS sensor, line-of-sight sensor, and at least one NLOS sensor, non-line-of-sight sensor, wherein the system is configured to
- generate first sensor signals by means of the at least one NLOS sensor, wherein the system is configured - after an evaluation of the first sensor signals - to detect the moving object (80), wherein the system is configured to determine or calculate data relating to the position and/or movement direction and/or speed and/or size of the moving object (80), wherein the system is configured to determine or calculate the data or at least a portion of the data relating to the position and/or movement direction and/or speed and/or size of the moving object (80) outside the vehicle (20),
- detect and/or recognise the moving object (80) at the second point in time by means of second sensor signals generated by the at least one LOS sensor, on the basis of the data relating to the position and/or movement direction and/or speed and/or size of the moving object (80),
wherein, in order to determine or calculate outside the vehicle (20) the data relating to the position and/or movement direction and/or speed and/or size of the moving object (80), the system is configured to transmit at least a portion of the first sensor signals generated at the first point in time to the edge cloud device (110) of the telecommunications network (100) by means of the communications interface of the vehicle (20) and to transmit the calculated data relating to the position and/or movement direction and/or speed and/or size of the moving object (80) to the vehicle (20) by means of the communications interface,
wherein the system is configured to use the calculated data received via the communications interface of the vehicle (20) and relating to the position and/or movement direction and/or speed and/or size of the moving object (80) in the vehicle (20) in order to prepare the at least one LOS sensor or the evaluation logic thereof for the detection and/or recognition of the moving object (80).

7. Computer program comprising commands, by means of which the steps of a method as claimed in any one of claims 1 to 5 can be performed when the computer program is executed on a programmable device of the vehicle and an edge cloud device.

8. Computer readable medium provided for storing a computer program, or a data carrier signal provided for transmitting a computer program, wherein the computer readable medium or the data carrier signal stores or transmits the computer program as claimed in claim 7, or wherein the computer readable medium or the data carrier signal stores or transmits the part of the computer program as claimed in claim 7 which is to be executed on a programmable device of the vehicle and an edge cloud device.

## Revendications

1. Procédé de détection d'un danger et/ou de prévention d'une collision d'un véhicule en mouvement (20) avec au moins un objet en mouvement (80), dans lequel le au moins un objet en mouvement (80) est optiquement caché ou n'est pas visible à un premier instant sur une ligne de vision directe (50) partant du véhicule (20) et est visible ou détectable à partir du véhicule (20) à un second instant, dans lequel le véhicule (20) comporte au moins un capteur de ligne de vision (line-of-sight sensor, LOS) et au moins un capteur hors ligne de vision (non-line-of-sight sensor, NLOS), dans lequel le procédé comporte les étapes suivantes :
- à une première étape, des premiers signaux de capteur sont générés au premier instant au moyen du au moins un capteur NLOS, dans lequel - après une analyse des premiers signaux de capteur - l'objet en mouvement (80) est détecté, dans lequel des données concernant la position et/ou la direction de déplacement et/ou la vitesse et/ou la taille de l'objet en mouvement (80) sont déterminées ou calculées, dans lequel les données ou au moins une partie des données concernant la position et/ou la direction de déplacement et/ou la vitesse et/ou la taille de l'objet en mouvement (80) sont déterminées ou calculées à l'extérieur du véhicule (20),
- à une seconde étape, l'objet en mouvement (80) est détecté et/ou identifié au second instant au moyen de seconds signaux de capteur générés par le au moins un capteur LOS, sur la base des données concernant la position et/ou la direction de déplacement et/ou la vitesse et/ou la taille de l'objet en mouvement (80),
dans lequel, pour la détermination ou le calcul à l'extérieur du véhicule (20) des données concernant la position et/ou la direction de déplacement et/ou la vitesse et/ou la taille de l'objet en mouvement (80), au moins une partie des premiers signaux de capteur générés au premier instant est transmise au moyen d'une interface de communication du véhicule (20) à un dispositif en périphérie de nuage (110) d'un réseau de télécommunications (100) et les données calculées concernant la position et/ou la direction de déplacement et/ou la vitesse et/ou la taille de l'objet en mouvement (80) sont transmises au véhicule (20) au moyen de l'interface de communication,
dans lequel les données calculées reçues via l'interface de communication du véhicule (20) concernant la position et/ou la direction de déplacement et/ou la vitesse et/ou la taille de l'objet en mouvement (80) sont utilisées dans le véhicule (20) afin de préparer le au moins un capteur LOS ou sa logique d'analyse à la détection et/ou à l'identification de l'objet en mouvement (80).

2. Procédé selon la revendication 1, **caractérisé en ce que** les premiers signaux de capteur générés à la première étape sont générés au moyen du au moins un capteur NLOS, sur la base de signaux électromagnétiques (82) qui proviennent de l'objet en mouvement (80), se propagent sur un trajet de propagation indirect (53) et - après au moins une réflexion sur une surface de réflexion (52) - sont détectés ou reçus par le au moins un capteur NLOS.

3. Procédé selon la revendication 2, **caractérisé en ce que** le véhicule (20) émet des signaux primaires électromagnétiques (22) et les signaux électromagnétiques (82) provenant de l'objet en mouvement (80) sont des signaux d'écho des signaux primaires (22) qui ont été réfléchis par l'objet en mouvement (80).

4. Procédé selon l'une des revendications précédentes, **caractérisé en ce que** la détection ou l'identification d'un objet quelconque au moyen du au moins un capteur LOS est réalisée périodiquement avec au moins une période prédéterminée, dans lequel les données calculées reçues via l'interface de communication du véhicule (20) concernant la position et/ou la direction de déplacement et/ou la vitesse et/ou la taille de l'objet en mouvement (80) sont générées au moins une période complète avant le second instant, en particulier afin de pouvoir effectuer plus rapidement et/ou plus précisément la détection de l'objet en mouvement (80) au moyen du au moins un capteurs LOS.

5. Procédé selon l'une des revendications 2 à 4, **caractérisé en ce que**
- les signaux électromagnétiques (82) ou
- les signaux primaires électromagnétiques (22) et les signaux électromagnétiques (82)
sont des signaux d'ondes radio ou des signaux lumineux dans le domaine spectral visible, ou des signaux infrarouges.

6. Système de détection d'un danger et/ou d'évitement d'une collision d'un véhicule en mouvement (20) avec au moins un objet en mouvement (80),
dans lequel le système comprend une interface de communication du véhicule en mouvement (20) et un dispositif en périphérie de nuage (110) d'un réseau de télécommunications (100),
dans lequel le au moins un objet en mouvement (80) est optiquement caché ou n'est pas visible à un premier instant sur une ligne de vision directe (50) partant du véhicule (20) et est visible ou détectable à partir du véhicule (20) à un second instant, dans lequel le véhicule (20) comporte au moins un capteur de ligne de vision, LOS, et au moins un capteur hors ligne de vision, NLOS, dans lequel le système est configuré pour
- générer des premiers signaux de capteur au moyen du au moins un capteur NLOS, dans lequel le système est configuré pour, - après une analyse des premiers signaux de capteur - détecter l'objet en mouvement (80), dans lequel le système est configuré pour déterminer ou calculer à l'extérieur du véhicule (20) des données concernant la position et/ou la direction de déplacement et/ou la vitesse et/ou la taille de l'objet en mouvement (80), dans lequel le système est configuré pour déterminer ou calculer les données ou au moins une partie des données concernant la position et/ou la direction de déplacement et/ou la vitesse et/ou la taille de l'objet en mouvement (80),
- détecter et/ou identifier l'objet en mouvement (80) au moyen de seconds signaux de capteur générés par le au moins un capteur LOS au second instant, sur la base des données concernant la position et/ou la direction de déplacement et/ou la vitesse et/ou la taille de l'objet en mouvement (80),
dans lequel le système est configuré de manière à, pour la détermination ou le calcul à l'extérieur du véhicule (20) des données concernant la position et/ou la direction de déplacement et/ou la vitesse et/ou la taille de l'objet en mouvement (80), transmettre au dispositif en périphérie de nuage (110) du réseau de télécommunications (100) au moins une partie des premiers signaux de capteur générés au premier instant au moyen de l'interface de communication du véhicule (20), et transmettre au véhicule (20) les données calculées concernant la position et/ou la direction de déplacement et/ou la vitesse et/ou la taille de l'objet en mouvement (80) au moyen de l'interface de communication, dans lequel le système est configuré pour utiliser dans le véhicule (20) les données calculées reçues via l'interface de communication du véhicule (20) concernant la position et/ou la direction de déplacement et/ou la vitesse et/ou la taille de l'objet en mouvement (80) afin de préparer le au moins un capteur LOS ou sa logique d'analyse à la détection et/ou à l'identification de l'objet en mouvement (80) .

7. Programme informatique comprenant des instructions au moyen desquelles les étapes d'un procédé selon l'une des revendications 1 à 5 peuvent être mises en œuvre lorsque le programme informatique est exécuté sur un dispositif programmable du véhicule et un dispositif en périphérie de nuage.

8. Support lisible par ordinateur destiné à stocker un programme informatique ou signal porteur de données destiné à transmettre un programme informatique, dans lequel le support lisible par ordinateur ou le signal porteur de données stocke ou transmet le programme informatique selon la revendication 7, ou dans lequel le support lisible par ordinateur ou le signal porteur données stocke ou transmet la partie du programme informatique selon la revendication 7 à exécuter sur un dispositif programmable du véhicule ou un dispositif en périphérie de nuage.
